(19) Europäisches Patentamt
European Patent Office
Office européen des brevets

(11) **EP 2 072 472 A1**

(12) **EUROPÄISCHE PATENTANMELDUNG**

(43) Veröffentlichungstag:
**24.06.2009   Patentblatt 2009/26**

(51) Int Cl.:
***C02F 1/467*** *(2006.01)*

(21) Anmeldenummer: 07024608.7

(22) Anmeldetag: **19.12.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(71) Anmelder: **CONDIAS GMBH
25524 Itzehoe (DE)**

(72) Erfinder:
 • **Matthias, Fryda
  25524 Itzehoe (DE)**
 • **Thorsten, Matthée
  25582 Hohenaspe (DE)**

(74) Vertreter: **Lins, Edgar et al
GRAMM, LINS & PARTNER
Theodor-Heuss-Strasse 1
38122 Braunschweig (DE)**

(54) **Verfahren zur Durchführung einer elektrochemischen Reaktion und elektrochemischen Reaktoranordnung**

(57)   Die Durchführung einer elektrochemischen Reaktion in einer wässrigen Flüssigkeit mittels die Flüssigkeit kontaktierender Elektroden, an die eine geeignete Spannung angelegt wird und von denen zumindest die Anode als Diamantelektrode ausgebildet worden ist, lässt sich hinsichtlich der Ausbeute und des Wirkungsgrads dadurch optimieren, dass das Potential der Anode auf über einem Mindestpotential zur Generierung von OH-Radikalen liegend eingestellt wird und dass durch Variation des Potentials der Anode oberhalb des Mindestpotentials die Stromdichte des Stroms zwischen den Elektroden variierbar ist.

**EP 2 072 472 A1**

**Beschreibung**

Die Erfindung betrifft ein Verfahren zur Durchführung einer elektrochemischen Reaktion in einer wässrigen Flüssigkeit mittels die Flüssigkeit kontaktierender Elektroden, an die eine geeignete Spannung angelegt wird und von denen zumindest die Anode als Diamantelektrode ausgebildet worden ist.

Die Erfindung betrifft ferner eine elektrochemische Reaktoranordnung mit einer Behandlungskammer zur Durchführung einer elektrochemischen Reaktion mit Hilfe von wenigstens zwei Elektroden, die als Anode und Kathode fungieren und die mit einer wässrigen Flüssigkeit in der Behandlungskammer kontaktierbar sind, wobei die Anode durch eine Diamantelektrode gebildet und mit einem solchen Mindestpotential ansteuerbar ist, dass an der Anode zumindest ganz überwiegend OH-Radikale aus Wasser gebildet werden.

Um elektrochemische Prozesse in einem Reaktor ablaufen zu lassen, wird an Anode und Kathode eine solche Spannung angelegt, die unter Abzug der über ohmsche Widerstände der Zuleitung und dem ohmschen Widerstand des Elektrolyten ein geeignetes Oxidationspotential an den Elektroden ausbildet. Dabei ist bekannt, dass bei bestimmten Oxidationspotentialen bestimmte Oxidationsreaktionen anfangen abzulaufen. Da eine wesentliche Überschreitung des für eine bestimmte Reaktion geeigneten Oxidationspotentials dazu führt, dass auch andere Reaktionen ablaufen, insbesondere in häufig unerwünschter Weise molekularer Sauerstoff gebildet wird, besteht ein übliches Vorgehen darin, im Labor eine optimale Spannung zu ermitteln, die beim Hochskalieren von Laboraufbauten auf Pilot- oder Produktionsanlagen in entsprechender Weise einzustellen ist. Es hat sich dabei herausgestellt, dass es sinnvoll ist, die Einstellung über die zu der optimalen Spannung gehörende elektrische Stromdichte vorzunehmen, die dann auch in der Pilot- oder Produktionsanlage eingestellt werden muss.

Dabei entsteht allerdings der Nachteil, dass die Einstellung der optimalen Stromdichte häufig mit unerwünschten Nebenerscheinungen einhergeht. So kann es beispielsweise sein, dass die optimale Stromdichte für eine bestimmte Reaktion mit einer hohen Wärmeentwicklung verbunden ist, was eine aufwändige Kühlung notwendig macht. In anderen Fällen kann es vorkommen, dass die optimale Stromdichte mit einer hohen Gasentwicklung verbunden ist, die die Anlage komplex und teuer macht.

Das im Stand der Technik bestehende Problem besteht somit darin, dass eine Optimierung der Ausbeute der gewünschten elektrochemischen Reaktion über die Einstellung der optimalen Stromdichte häufig zu nicht unerheblichen Problemen führt.

Der Erfindung liegt somit die Problemstellung zugrunde, eine Optimierung der Ausbeute der elektrochemischen Reaktion zu ermöglichen, ohne negative Begleiterscheinungen in Kauf nehmen zu müssen.

Zur Lösung dieser Aufgabe ist erfindungsgemäß ein Verfahren der eingangs erwähnten Art dadurch gekennzeichnet, dass das Potential der Anode auf über einem Mindestpotential zur Generierung von OH-Radikalen liegend eingestellt wird und dass durch Variation des Potentials der Anode oberhalb des Mindestpotentials die Stromdichte des Stroms zwischen den Elektroden zur Optimierung eingestellt wird.

Ausgehend von der erwähnten Problemstellung ist ferner eine elektrochemische Reaktoranordnung der eingangs erwähnten Art erfindungsgemäß dadurch gekennzeichnet, dass mittels einer Steuerung die als Anode fungierende Diamantelektrode mit einem solchen Mindestpotential angesteuert wird, dass an der Anode zumindest ganz überwiegend OH-Radikale aus Wasser gebildet werden und dass die durch die Flüssigkeit fließende Stromdichte mit zunehmender Behandlungsdauer und / oder aufgrund von Messwerten eines Messfühlers für die Flüssigkeit veränderbar ist.

Die vorliegende Erfindung beruht auf der Erkenntnis, dass die bei den üblichen Elektrochemischen Elektrodenanordnungen bestehende Tendenz, eine bestimmte Reaktion bei bestimmten Oxidationspotentialen ablaufen zu lassen, bei Diamantelektroden so gut wie nicht besteht. Die Diamantelektroden ermöglichen eine hohe Überspannung, sodass ein Oxidationspotential eingestellt werden kann, bei dem an der Diamantelektrode zumindest ganz überwiegend OH-Radikale aus Wasser gebildet werden. Etwaige benötigte andere Reaktionen laufen dann als Folgereaktionen ab, weil die OH-Radikale geeignet sind, andere Oxidationsreaktionen, beispielsweise über Ozon ($O_3$), Wasserstoffperoxid ($H_2O_2$), Persulfat ($S_2O_8^{2-}$) usw. ablaufen zu lassen. Diese Erkenntnis wird erfindungsgemäß dazu ausgenutzt, die zwischen den Elektroden im Elektrolyten entstehende Stromdichte so zu steuern, dass eine optimierte Effizienz erreicht wird, also eine optimierte Ausbeute der elektrochemischen Reaktion bei einem minimalen Energieeinsatz erhalten wird.

Die OH-Radikale sind beispielsweise geeignet, organisches Material, das gelöst oder dispergiert im Elektrolyten enthalten ist, durch Oxidation zu mineralisieren. Wird daher Abwasser in einer vorbestimmten Menge beispielsweise gereinigt, besteht die höchste Belastung mit organischem Material, gemessen in der CSB-Konzentration (CSB = chemischer Sauerstoffbedarf) am Beginn der Reinigung, während mit zunehmender Behandlungsdauer der CSB-Bedarf kontinuierlich abfällt. Dem kann durch die vorliegende Erfindung Rechnung getragen werden, dass die Stromdichte verringert wird, indem die angelegte Spannung verringert wird, wobei allerdings die Einhaltung des Mindestpotentials als Oxidationspotential an der Anode zu beachten ist.

Das erfindungsgemäße Verfahren eignet sich insbesondere für den Abbau von organischen Bestandteilen in einem Abwasser. Die Zusammensetzung von kommunalen wie auch industriellen Abwässern ist regelmäßig nicht bekannt. Demgemäß ist eine Ermittlung der optimalen Stromdichte, wie sie bisher angestrebt worden ist, bei derartigen Abwässern praktisch unmöglich. Durch die erfindungsgemäße von Diamantelektroden, die mit einem Mindestpotential zur Erzeugung von OH-Radikalen betrieben werden, ist es nunmehr möglich, die Stromdichte auf die Konzentration der Kontamination anzupassen. Während des Abbaus der organischen Verunreinigung, der mit einer Verringerung der CSB-Konzentration einhergeht, kann die Stromdichte immer weiter nach unten angepasst werden, solange die Mindestspannung zur Erzeugung der OH-Radikale überschritten bleibt.

Bei einer elektrochemischen Abwasserreinigung in einem Tank, der komplett gereinigt wird, kann die Stromdichte entsprechend der Verminderung der CSB-Konzentration in einfacher Weise mit der Behandlungsdauer vermindert werden. Alternativ ist es natürlich möglich, die CSB-Konzentration zu messen und die Stromdichte zum optimalen Abbau entsprechend der gemessenen CSB-Konzentration einzustellen. Die CSB-Konzentration kann dabei unmittelbar oder über ein korreliertes Signal, wie zum Beispiel Trübung, Farbe oder Leitfähigkeit des Abwassers, bestimmt werden. Die Steuerung der Stromdichte muss dabei natürlich nicht kontinuierlich erfolgen, sondern kann auch in diskreten Schritten vorgenommen werden.

Bei einer kontinuierlichen Behandlung des Abwassers, bei der in einem einmaligen Fluss das Abwasser gereinigt wird, kommen regelmäßig mehrere elektrochemische Reaktoren, die in Flussrichtung des Abwassers (Elektrolyten) hintereinander geschaltet sind. In Flussrichtung des Elektrolyten wird dabei eine immer kleinere Stromdichte eingestellt. Eine derartige Kaskade von Reaktoren ist besonders dann vorteilhaft, wenn der Anfangswert der Konzentration zeitlich nicht stark schwankt, sodass die fest vorgegebene Stromdichte in den Reaktoren die gewünschte Abbauleistung immer erreicht. Für den Abbau von organischen Bestandteilen gibt es eine feste Relation zwischen der optimalen Stromdichte und der CSB-Konzentration:

$$j = 0{,}024 \ [A{*}l/g \ O_2{*}cm^2]{*}CSB.$$

Dabei wird die Stromdichte in der Einheit $A/cm^2$ und der CSB-Wert in der Einheit $g \ O_2/l$ angegeben.

In dieser Relation exakt eingehalten wird, folgt der CSB-Abbau einem exponentiellen Abbaugesetz. Die Gleichung, mit der der Abbau des chemischen Sauerstoffbedarfs (CSB) berechnet wird, lautet:

$$CSB(t) = CSB_{Start} \cdot e^{-0{,}0072 \frac{A}{V} t}$$

mit

| | | |
|---|---|---|
| A: | aktive Diamantanodenfläche | $[cm_2]$ |
| V: | zu behandelndes Wasservolumen | [Liter] |
| t: | Abbauzeit | [h] |
| $CSB_{Start}$: | Startwert an CSB | $[g \ O_2/Liter]$ |
| CSB (t) | CSB-Wert nach der Zeit t | $[g \ O_2/Liter]$ |

Mit Hilfe dieser Formel lässt sich bei bekannten anderen Variablen die notwendige Anodenfläche für ein bestimmtes Abbauproblem errechnen. Das logarithmische Dekrement ergibt sich aus der ablaufenden Reaktion (OH-Erzeugung) und der kinetischen Transportkonstanten ($k_m$).

Beispiel:

| | |
|---|---|
| A: | $18.000 \ cm^2$ |
| V: | 200 Liter |
| t: | 2,5 h |
| $CSB_{Start}$: | $1,5 \ g \ O_2/Liter$ |

$$\rightarrow \quad CSB\ (t=2,5h) = 0,297\ g\ O_2/Liter$$

$$CSB(t = 2,5) = 1,5 \cdot e^{-0,0072\frac{18.000}{200}2,5} \approx 0,297$$

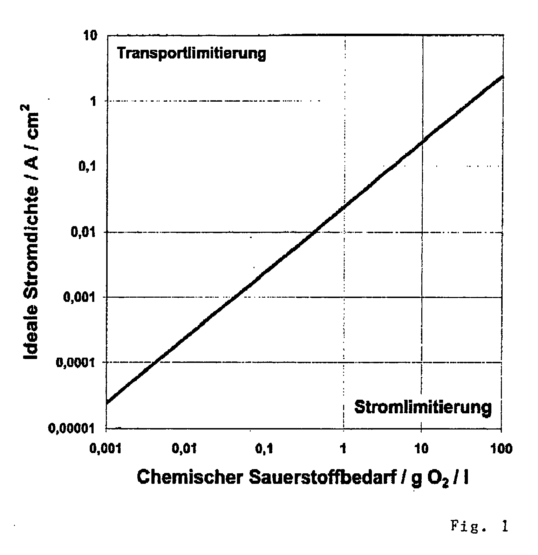

Das als Figur 1 beigefügte Diagramm verdeutlicht den Verlauf der optimalen Stromdichte (als Ordinate aufgetragen) im Verhältnis zu dem CSB-Wert (= chemical oxigen demand - COD). Wird die Stromdichte unterschritten (current limitation region) wird ein zu geringer Anteil der organischen Bestandteile abgebaut, also keine optimale Ausbeute erzielt.

Wird die optimale Stromdichte hingegen überschritten, werden zu viele OH-Radikale für die vorhandenen organischen Bestandteile gebildet, sodass die Radikale unbenutzt zurückbilden. In diesem Fall ist der Energieeinsatz für den erzielten Effekt zu hoch.

Die Erfindung ermöglicht somit die Steuerung der Stromdichte in dem Bereich der optimalen Ausbeute, weil erstmalig die Freiheit besteht, die Stromdichte zu variieren, ohne an der Qualität der ablaufenden elektrochemischen Reaktion Änderungen hervorzurufen. Dies liegt - wie erwähnt - daran, dass mit der Diamantelektrode nach Überschreiten der Mindestspannung nahezu ausschließlich OH-Radikale gebildet werden, wobei von der Stromdichte lediglich die Anzahl der gebildeten OH-Radikale abhängt, nicht jedoch ein anderes Oxidationsprodukt an der Anode entsteht.

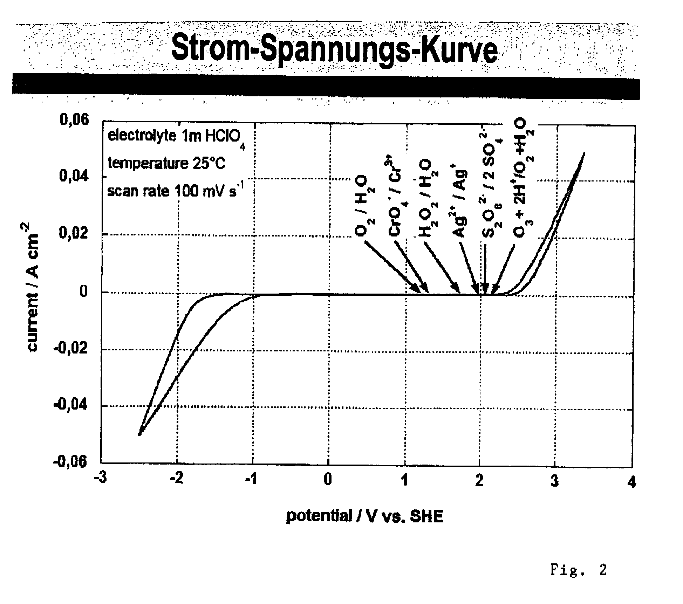

Figur 2 verdeutlicht den Zusammenhang zwischen der Stromdichte und dem Oxidationspotential (normiert auf die Standard-Wasserstoff-Elektrode). Es ist in Figur 2 erkennbar, dass für bestimmte Reaktionen bestimmte Oxidationspotentiale in einem engen Bereich eingestellt werden müssen, die keine Variation der Stromdichte zu lassen. Erst bei Überschreitung des Oxidationspotentials über etwa 2,3 V entsteht ein nahezu linearer verwertbarer Anstieg der Stromdichte, wobei sich an der Art der Reaktion an der Anode nichts mehr ändert, weil immer bei der Verwendung einer Diamantelektrode OH-Radikale gebildet werden und von der Höhe der Stromdichte lediglich die Anzahl der gebildeten OH-Radikale abhängt.

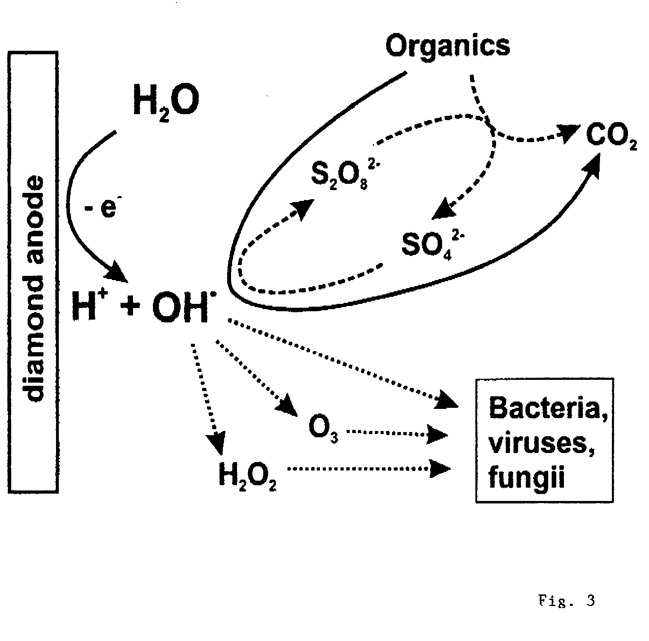

Die schematische Darstellung in Figur 3 verdeutlicht, dass mit der Diamantelektrode immer OH-Radikale gebildet werden, die beispielsweise in Abwässern unmittelbar Bakterien, Viren und Pilze durch Oxidation mineralisieren können. Dieser Mineralisierungsvorgang kann aber auch dadurch erfolgen, dass mit den OH-Radikalen Ozon ($O_3$) oder Wasserstoffperoxid ($H_2O_2$) generiert wird.

Die OH-Radikale sind ferner in der Lage, die Oxidation von $SO_4$ in $S_2O_8$ und die Mineralisierung anderer organischer Materialien zu gasförmigen $CO_2$ vorzunehmen.

**Patentansprüche**

1. Verfahren zur Durchführung einer elektrochemischen Reaktion in einer wässrigen Flüssigkeit mittels die Flüssigkeit kontaktierender Elektroden, an die eine geeignete Spannung angelegt wird und von denen zumindest die Anode als Diamantelektrode ausgebildet worden ist, **dadurch gekennzeichnet, dass** das Potential der Anode auf über einem Mindestpotential zur Generierung von OH-Radikalen liegend eingestellt wird und dass durch Variation des Potentials der Anode oberhalb des Mindestpotentials die Stromdichte des Stroms zwischen den Elektroden variierbar ist.

2. Verfahren nach Anspruch 1, **dadurch gekennzeichnet, dass** als elektrochemische Reaktion der Abbau von organischen Bestandteilen in einem Abwasser betrieben wird.

3. Verfahren nach Anspruch 2, **dadurch gekennzeichnet, dass** bei einem Abbau der organischen Bestandteile einer vorgegebenen Flüssigkeitsmenge während einer Behandlungszeit die Stromdichte mit zunehmender Behandlungszeit verringert wird.

4. Verfahren nach Anspruch 2 oder 3, **dadurch gekennzeichnet, dass** für eine Behandlung der Flüssigkeit mit in Strömungsrichtung hintereinander geschalteten Reaktoren die Stromdichte stromabwärts liegender Reaktoren niedriger oder gleich eingestellt wird als stromaufwärts liegende Reaktoren und dass die Stromdichte in dem am weitesten stromabwärts liegenden Reaktor kleiner ist als in dem am weitesten stromaufwärts liegenden Reaktor.

**5.** Verfahren nach einem der Ansprüche 2 bis 4, **dadurch gekennzeichnet, dass** eine CSB-Konzentration im Abwasser gemessen wird und dass in Abhängigkeit vom gemessenen CSB-Wert die Stromdichte eingestellt wird.

**6.** Elektrochemische Reaktoranordnung mit einer Behandlungskammer zur Durchführung einer elektrochemischen Reaktion mit Hilfe von wenigstens zwei Elektroden, die als Anode und Kathode fungieren und die mit einer wässrigen Flüssigkeit in der Behandlungskammer kontaktierbar sind, wobei die Anode durch eine Diamantelektrode gebildet ist, **dadurch gekennzeichnet, dass** mittels einer Steuerung die Diamantelektrode mit einem solchen Mindestpotential angesteuert wird, dass an der Anode zumindest ganz überwiegend OH-Radikale aus Wasser gebildet werden und dass die durch die Flüssigkeit fließende Stromdichte mit zunehmender Behandlungsdauer und / oder aufgrund von Messwerten eines Messfühlers für die Flüssigkeit veränderbar ist.

**7.** Elektrochemische Reaktoranordnung nach Anspruch 6, **dadurch gekennzeichnet, dass** sie aus mehreren Reaktoren besteht, durch die nacheinander die zu behandelnde Flüssigkeit leitbar ist und dass wenigstens ein stromabwärts gelegener Reaktor zur Bearbeitung mit einer geringeren Stromdichte vorgesehen ist als wenigstens ein stromaufwärts gelegener Reaktor.

**8.** Elektrochemische Reaktoranordnung nach Anspruch 6 oder 7, **gekennzeichnet durch** einen CSB-Sensor für die zu behandelnde Flüssigkeit und eine Steuerung für die Stromdichte in Abhängigkeit von dem vom CSB-Sensor erstellten Messwert.

Fig. 1

Fig. 2

Fig. 3

**Europäisches Patentamt**

# EUROPÄISCHER RECHERCHENBERICHT

Nummer der Anmeldung

EP 07 02 4608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PANIZZA ET AL: "Oxidation of organic pollutants on BDD anodes using modulated current electrolysis" ELECTROCHIMICA ACTA, ELSEVIER SCIENCE PUBLISHERS, BARKING, GB, [Online] Bd. 53, Nr. 5, 29. September 2007 (2007-09-29), Seiten 2289-2295, XP022401066 ISSN: 0013-4686 * Seite 2290; Tabellen 2-4 * * Seite 2292 - Seite 2294 * * Abbildungen 4-7 * ----- | 1-8 | INV. C02F1/467 |
| X | INIESTA J ET AL: "Electrochemical oxidation of phenol at boron-doped diamond electrode" ELECTROCHIMICA ACTA, ELSEVIER SCIENCE PUBLISHERS, BARKING, GB, Bd. 46, Nr. 23, 10. August 2001 (2001-08-10), Seiten 3573-3578, XP004299615 ISSN: 0013-4686 * Seite 3574 - Seite 3576 * ----- | 1,2,6 | |
| A | PANIZZA ET AL: "Application of diamond electrodes to electrochemical processes" ELECTROCHIMICA ACTA, ELSEVIER SCIENCE PUBLISHERS, BARKING, GB, Bd. 51, Nr. 2, 10. Oktober 2005 (2005-10-10), Seiten 191-199, XP005099489 ISSN: 0013-4686 * das ganze Dokument * ----- -/-- | 1-8 | RECHERCHIERTE SACHGEBIETE (IPC) C02F |

Der vorliegende Recherchenbericht wurde für alle Patentansprüche erstellt

| Recherchenort | Abschlußdatum der Recherche | Prüfer |
|---|---|---|
| Den Haag | 15. Mai 2008 | Liebig, Thomas |

EPO FORM 1503 03.82 (P04C03)

| | Europäisches Patentamt | EUROPÄISCHER RECHERCHENBERICHT | Nummer der Anmeldung EP 07 02 4608 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | TROSTER I ET AL: "Electrochemical advanced oxidation process for water treatment using DiaChem<(>R) electrodes" DIAMOND AND RELATED MATERIALS, ELSEVIER SCIENCE PUBLISHERS, AMSTERDAM, NL, Bd. 11, Nr. 3-6, 1. März 2002 (2002-03-01), Seiten 640-645, XP004356991 ISSN: 0925-9635 * das ganze Dokument * ----- | 1-8 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 15. Mai 2008 | Liebig, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)